# EUROPÄISCHE PATENTSCHRIFT

(11) **EP 2 273 000 B1**
(45) Veröffentlichungstag und Bekanntmachung des Hinweises auf die Patenterteilung: **09.05.2012**
(21) Anmeldenummer: 10005342.0
(22) Anmeldetag: 21.05.2010
(51) Int. Cl.: D01H 4/14, H02P 3/14, H02P 6/24

(54) **Arbeitsstelle einer Offenend-Rotorspinnmaschine und Verfahren zum Betreiben der Arbeitsstelle**
Workstation of an open ended rotor spinning machine and procedure for operating the workstation
Poste de travail d'un métier à tisser à rotor à extrémité ouverte et procédé de fonctionnement du poste de travail

(30) Priorität: 11.07.2009 DE 102009032714
(43) Veröffentlichungstag der Anmeldung: 12.01.2011
(73) Patentinhaber: Oerlikon Textile GmbH & Co. KG, 42897 Remscheid (DE)
(72) Erfinder: Coenen, Norbert, 41199 Mönchengladbach (DE)
(74) Vertreter: Hamann, Arndt

(56) Entgegenhaltungen:
- DE-A1- 19 518 991
- DE-A1-102005 035 055

## Beschreibung

Die Erfindung betrifft eine Arbeitsstelle einer Offenend-Rotorspinnmaschine mit einem Rotorantrieb, der einen Rotormotor und Steuermittel aufweist, wobei die Steuermittel eine leistungselektronische Schaltung beinhalten, die einen Spannungseingang und einen Spannungsausgang aufweist, wobei die Offenend-Rotorspinnmaschine mindestens ein Netzteil aufweist, an das der Spannungseingang zumindest im Produktionsbetrieb der Arbeitsstelle angeschlossen ist und wobei der Rotormotor an den Spannungsausgang angeschlossen ist und zum Bremsen mittels der Steuermittel als Generator betreibbar ist. Ferner betrifft die Erfindung ein Verfahren zum Betreiben der Arbeitsstelle.

Offenend-Rotorspinnmaschinen sind im Stand der Technik seit langem bekannt. Hierbei wird der Arbeitsstelle der Offenend-Rotorspinnmaschinen ein Faserband zugeführt. Das Faserband wird zuerst in einzelne Fasern aufgelöst und von einem Luftstrom in eine sehr schnell drehende Trommel mit nach innen geneigter Wand - den Spinnrotor - befördert, dessen Drehzahl bis zu 150.000 U/min beträgt. Durch die Beschleunigung rutschen die Fasern in die Rille am Fuß der Rutschwand des Spinnrotors. Dort werden sie gesammelt, bis die Garnstärke erreicht ist und werden axial durch die Düse in der Drehachse abgezogen und damit zu einem Garn verdreht. Das abgezogene Garn wird dann auf eine Kreuzspule gespult.

Aufgrund der hohen Betriebsdrehzahl weist der Rotor eine hohe kinetische Energie auf. Zum Bremsen des Spinnrotors beziehungsweise des Rotorantriebes muss diese Energie dem Rotor wieder entzogen werden. Um die Verluste des Rotors im Normalbetrieb gering zu halten und eine Schädigung zu vermeiden, sind solche Rotoren reibungsarm gelagert. Ein bloßes Abschalten des Antriebes würde also ein langes Auslaufen des Rotors bis zum Stillstand zur Folge haben.

In der DE 44 21 406 A1 ist ein einzelmotorischer Antrieb mit einem Magnet-/Gaslager für einen Spinnrotor offenbart. Hierbei wird die Gasversorgung überwacht. Bei einer erkannten Störung der Gasversorgung wird ein Lastwiderstand über einen Schalter an den Stromkreis des Antriebsmotors angeschlossen. Der Antriebsmotor arbeitet dann im Generatorbetrieb und gibt elektrische Bremsenergie an den Lastwiderstand ab, der diese in Verlustwärme umsetzt. Das schnelle Abbremsen ist in dem hier beschriebenen Fall erforderlich, um bei dem durch das Zusammenbrechen des Gaspolsters bedingten Landen der Lagerfläche des Rotors auf der statorseitigen Lagerfläche eine Schädigung des Antriebs zu verhindern.

Das schnelle Bremsen des Rotors kann unabhängig von den jeweiligen Ausführungen des Rotorantriebes aus einer Vielzahl von Gründen erforderlich sein. Zum einen kann eine Bremsung des Rotors erforderlich sein, um bei Erkennen eines Fehlers eine Schädigung des Rotors oder anderer Arbeitsstellenteile zu verhindern, zum anderen muss vor jedem Öffnen der Spinnbox, in der der Spinnrotor angeordnet ist, der Spinnrotor aus Sicherheitsgründen zum Stillstand gebracht werden. Das Öffnen der Spinnbox ist dabei zum Beispiel erforderlich, um den Spinnrotor bei einem Partiewechsel auszutauschen oder um den Rotor zu reinigen und von unerwünschten Rückständen des Spinnprozesses zu befreien, die sich ansonsten negativ auf das gesponnene Garn auswirken würden. Ohne die Möglichkeit einer schnellen Bremsung des Rotors beziehungsweise des Rotorantriebes würde die Produktivität der Spinnmaschine deutlich herabgesetzt.

Die Verwendung eines Last- oder Bremswiderstandes, um Energie aus einem elektrischen Antrieb aufzunehmen, ist seit langem bekannt und hat sich in seiner Funktion bewährt. In Verbindung mit dem notwendigen Schalter, häufig ein Halbleiterschalter, spricht man auch von einem Brems-Chopper. Es handelt sich dabei um ein zusätzliches Bauteil, um elektrische Energie aufzunehmen und als Wärme abzugeben. Der Brems-Chopper muss so angeordnet sein, dass die Wärme auch abgegeben werden kann. Im Extremfall kann sogar eine zusätzliche Kühlung erforderlich sein.

Die DE 10 2005 035 055 A1 offenbart einen Rotorantrieb einer Offenend-Rotorspinnmaschine mit einem magnetisch gelagerten Rotor. Um eine Schädigung des Antriebes und der Lagerung bei einem Ausfall der Versorgungsspannung zu verhindern, wird der den Rotor antreibende Elektromotor bei einem Ausfall der Versorgungsspannung als Generator betrieben, um die Steuerungsvorrichtung der Motorschaltung und insbesondere die der berührungslosen Lagerung dienende Magnetlagerung des Rotors weiter mit Spannung zu versorgen. Dabei reduziert sich dann zwangsläufig die Drehzahl des Rotormotors, da die Steuerungsvorrichtung Energie aufnimmt. Erst wenn die Drehzahl so weit abgesunken ist, dass der Betrieb der Steuerungsvorrichtung nicht mehr aufrecht erhalten werden kann, wird der Rotormotor ohne Zuhilfenahme eines Lastwiderstandes kurzgeschlossen. Dieses Verfahren ermöglicht zwar ein sicheres Bremsen des Rotors bei Ausfall der Versorgungsspannung, wegen der eher geringen Energieaufnahme der Steuerungsvorrichtung ist der Prozess im Vergleich zu einer Bremsung mit einem Lastwiderstand allerdings eher langsam. Ein schnelles Bremsen innerhalb der Produktionsabläufe an der Rotorspinnmaschine ist auf diese Weise nicht möglich. In der DE 10 2005 035 055 A1 geht es vielmehr um das Verhindern eines Crashs des Rotorantriebes bei einem Ausfall der Versorgungsspannung.

Es ist daher die Aufgabe der vorliegenden Erfindung, eine schnelle Bremsung des Spinnrotors beziehungsweise des zugehörigen Rotormotors einer Arbeitsstelle einer Offenend-Rotorspinnmaschine mit einfachen Mitteln zu ermöglichen.

Die Aufgabe wird erfindungsgemäß durch die kennzeichnenden Merkmale der Arbeitsstelle nach Anspruch 1 sowie durch das Verfahren gemäß dem Anspruch 7 gelöst. Vorteilhafte Weiterbildungen der Erfindung sind Gegenstand der Unteransprüche.

Zur Lösung der Aufgabe ist an der Arbeitsstelle mindestens ein weiterer elektrischer Verbraucher, der für den Produktionsbetrieb der Arbeitsstelle erforderlich ist, vorhanden und eine Schaltungsanordnung ist dazu ausgebildet, die elektrische Bremsenergie, die der Rotorantrieb beim Bremsen abgibt, dem mindestens einen weiteren elektrischen Verbraucher zuzuführen und der mindestens eine weitere elektrische Verbraucher ist dazu ausgebildet, die Energie aufzunehmen.

Die erfindungsgemäße Lösung ersetzt einen zusätzlichen Lastwiderstand durch mindestens einen elektrischen Verbraucher der Arbeitsstelle, der ohnehin für den Produktionsbetrieb vorhanden ist. Erfindungsgemäß ist also kein zusätzliches Bauteil zur Aufnahme der Leistung erforderlich, wodurch die Bremsvorrichtung der Arbeitsstelle deutlich vereinfacht wird. Die Bremsung kann jedoch genauso schnell und effektiv erfolgen wie mit einem Lastwiderstand. Bei passender Auswahl des Verbrauchers kann durchaus ein Verbraucher ausreichend sein, um eine angemessen kurze Bremszeit zu erreichen. Vorteilhafterweise wird die Bremsenergie des Rotors jedoch mehreren elektrischen Verbrauchern zugeführt, da so die aus dem Rotor abführbare Energie deutlich erhöht und die Bremszeiten weiter verkürzt werden können. Die Verwendung mehrer Verbraucher hat außerdem den Vorteil, dass sich die entstehende Verlustwärme verteilt und damit besser abgeführt werden kann. Unter den Verbrauchern können natürlich auch die Steuereinrichtungen der Arbeitsstellen sein. Wie bereits erläutert, können Steuereinrichtungen allerdings nur wenig Energie aufnehmen, so dass diese eher ergänzend eingesetzt werden.

Vorteilhafterweise ist der mindestens eine weitere elektrische Verbraucher, der die Bremsenergie des Rotorantriebes aufnehmen kann, als elektrischer Antrieb ausgebildet. Ein elektrischer Antrieb weist eine hohe Energieaufnahmefähigkeit auf. Neben Steuermitteln weist ein solcher Antrieb einen elektrischen Motor auf, dessen Wicklungen einen elektrischen Widerstand aufweisen und wie ein Lastwiderstand verwendet werden können. Die von der Wicklung aufgenommene Energie wird als elektrische Verlustwärme wieder abgegeben. Zusätzlich kann der Motor mittels der Bremsenergie in Drehung versetzt werden. Die aufgenommene Bremsenergie setzt der Motor neben der elektrischen Verlustwärme also auch in kinetische Energie um. Die kinetische Energie wird durch die auftretende Reibung ebenfalls in Wärme umgewandelt.

Gemäß einer bevorzugten Ausführungsform der erfindungsgemäßen Arbeitsstelle ist der elektrische Antrieb dazu ausgebildet, mindestens eines der Aggregate Auflösewalze für das Faserband, Fadenabzug aus dem Spinnrotor, Fadenverlegung auf die Garnspule, Wickelwalze zum Rotieren der Garnspule und Schwenkvorrichtung für die Saugdüse zum Erfassen des Fadens der Garnspule anzutreiben. Die genannten Antriebe sind für die Verwendung innerhalb des Produktionsprozesses an Arbeitsstellen von Offenend-Rotorspinnmaschinen bekannt. Erfindungsgemäß können sie dazu ausgebildet sein, die Bremsenergie des Rotors aufzunehmen. In der Regel ist der Spinnbetrieb bei einer Bremsung des Rotors ohnehin unterbrochen, so dass die Antriebe in diesem Fall in erster Linie der Energieaufnahme dienen und nicht ihrer regulären Funktion im Produktionsbetrieb der Arbeitsstelle. Gegebenenfalls ist darauf zu achten, dass dabei keine schädlichen Rückwirkungen auf den Produktionsprozess entstehen. So ist es zum Beispiel sinnvoll, die Garnspule von der Wickelwalze abzuheben, wenn die Wickelwalze zur Aufnahme der Bremsenergie des Spinnrotors rotiert. Die Saugdüse kann prinzipiell zur Energieaufnahme auf und ab bewegt werden. Lediglich beim Vorbeifahren eines Wechslerwagens ist darauf zu achten, dass es nicht zu Kollisionen kommt.

Vorteilhafterweise sind der Rotorantrieb und der mindestens eine weitere elektrische Verbraucher beide an das Netzteil angeschlossen. Bei dieser Schaltungsanordnung sind der Rotorantrieb und der mindestens eine elektrische Verbraucher bei Einleitung einer Rotorbremsung bereits miteinander verbunden, so dass eine zusätzliche Schalteinrichtung nicht gebraucht wird. Es ist möglich, jedoch nicht unbedingt erforderlich, das Netzteil im Bremsbetrieb von den Verbrauchern zu trennen, um einen zusätzlichen Energiezufluss aus dem Netzteil zu verhindern.

Im Generatorbetrieb des Rotormotors kann es zu einer Überhöhung der Versorgungsspannung kommen, wenn die vom Generator abgegebene Leistung nicht von den Verbrauchern der Arbeitsstelle aufgenommen werden kann. Dieses Problem kann beim Ausfall eines Verbrauchers auftreten. Um eine die Bauteile gefährdende Überspannung zu verhindern, sind gemäß einer bevorzugten Ausgestaltung der Erfindung die Steuermittel des Rotorantriebes dazu ausgebildet, die von dem Rotormotor abgegebene Bremsleistung so zu begrenzen, dass am Spannungseingang der leistungselektronischen Schaltung des Rotorantriebes ein zulässiger Spannungswert nicht überschritten wird. Die Steuermittel können dazu die leistungselektronische Schaltung so ansteuern, dass beim Überschreiten eines zulässigen Spannungswertes am Spannungseingang die Spannung am Spannungsausgang der leistungselektronischen Schaltung angepasst wird. Durch eine Anpassung dieser Spannung kann der Betrag des Motorstromes und damit die Bremsleistung reduziert werden. Der Motor- beziehungsweise Bremsstrom kann dabei als Führungsgröße dienen und auf einen vorgegebenen Wert reduziert werden.

Zur Lösung der Aufgabe wird ferner ein Verfahren zum Betreiben einer Arbeitsstelle einer Offenend-Rotorspinnmaschine mit einem Rotorantrieb, der einen Rotormotor und Steuermittel aufweist, vorgeschlagen, wobei die Steuermittel eine leistungselektronische Schaltung beinhalten, die einen Spannungseingang und einen Spannungsausgang aufweist, wobei der Spannungseingang zumindest im Produktionsbetrieb der Arbeitsstelle an ein Netzteil angeschlossen ist und wobei der Rotormotor an den Spannungsausgang angeschlossen ist und zum Bremsen mittels der Steuermittel als Generator betrieben wird. Erfindungsgemäß wird die elektrische Bremsenergie, die der Rotorantrieb beim Bremsen abgibt, von mindestens einem weiteren elektrischen Verbraucher der Arbeitsstelle aufgenommen, der für den Produktionsbetrieb der Arbeitsstelle erforderlich ist.
Gemäß einer bevorzugten Ausführungsform des erfindungsgemäßen Verfahrens wird die Bremsenergie von einem elektrischen Antrieb der Arbeitsstelle aufgenommen.

Gemäß einer Weiterbildung des Verfahrens treibt der elektrische Antrieb mindestens eines der Aggregate Auflösewalze für das Faserband, Fadenabzug aus dem Spinnrotor, Fadenverlegung auf die Garnspule, Wickelwalze zum Rotieren der Garnspule und Schwenkvorrichtung für die Saugdüse zum Erfassen des Fadens der Garnspule an.
Vorteilhafterweise wird die von dem Rotorantrieb abgegebene Bremsleistung so beeinflusst, dass am Spannungseingang der leistungselektronischen Schaltung des Rotorantriebes ein zulässiger Spannungswert nicht überschritten wird. Gemäß einer bevorzugten Ausführungsform wird dazu beim Überschreiten eines zulässigen Spannungswertes am Spannungseingang die Spannung am Spannungsausgang der leistungselektronischen Schaltung angepasst.

Die Erfindung wird nachfolgend anhand eines in den Zeichnungen dargestellten Ausführungsbeispiels näher erläutert.

Es zeigen:
- Fig. 1: schematisch in Seitenansicht eine Arbeitsstelle einer Offenend-Rotorspinnmaschine;
- Fig. 2: eine Schaltungsanordnung mit einem Rotorantrieb und weiteren elektrischen Verbrauchern zur Aufnahme von Bremsenergie.

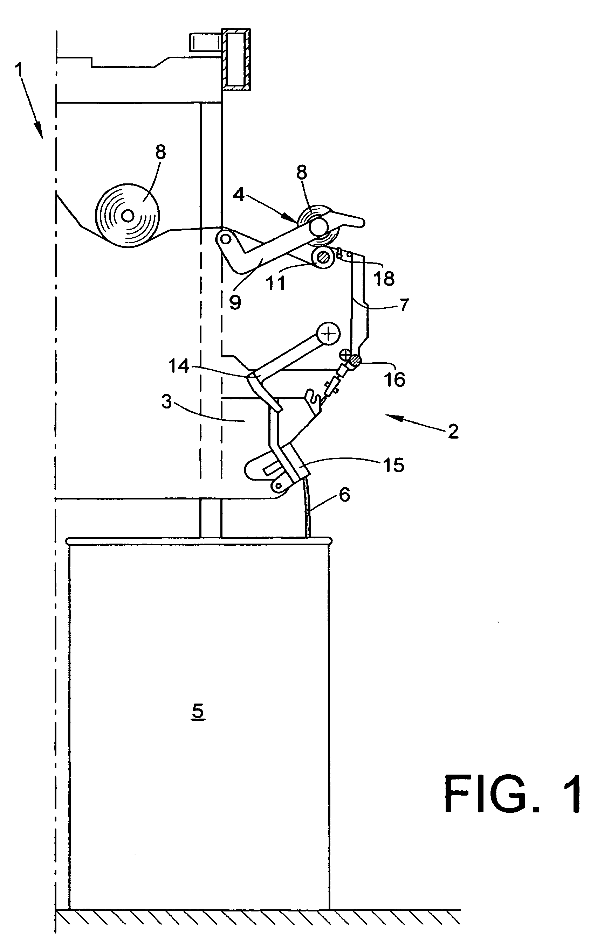

Fig. 1 zeigt eine Arbeitsstelle einer an sich bekannten Offenend-Rotorspinnmaschine 1.Derartige Offenend-Rotorspinnmaschinen 1 weisen eine Vielzahl von in Reihe nebeneinander angeordneten, identischen Arbeitsstellen 2 auf, die jeweils mit einer Spinnvorrichtung 3 sowie einer Spuleinrichtung 4 ausgerüstet sind. In den Spinnvorrichtungen 3 wird mittels eines Spinnrotors das in Spinnkannen 5 vorgelegte Faserband 6 zu Spinnfäden 7 gesponnen, die auf den Spuleinrichtungen 4 zu Garnspulen 8 aufgewickelt werden.

Eine Auflösewalze 15 bereitet das Faserband 6 vor, welches der Spinnvorrichtung 3 zugeführt wird. Der Fadenabzug 16 zieht den fertig gesponnen Spinnfaden 7 aus dem Spinnrotor beziehungsweise aus der Spinnvorrichtung 3 ab. Des Weiteren verfügen die Arbeitsstellen 2 jeweils über eine Fadenverlegung 18, die den Spinnfaden 7 changierend der Garnspule 8 zuführen. Wie angedeutet, sind die Spuleinrichtungen 4 jeweils mit einem Spulenrahmen 9 zum drehbaren Halten einer Garnspule 8 und einer Wickelwalze 11 zum Rotieren der Garnspule 8 ausgestattet. Weiter ist eine arbeitsstelleneigene Saugdüse 14 vorhanden. Diese ist schwenkbar gelagert und wird bei einer Fadenunterbrechung in Richtung der Garnspule geschwenkt, um das Fadenende auf der Garnspule 8 zu erfassen.

Die beschriebenen Handhabungseinrichtungen der Arbeitsstelle weisen jeweils einen in Fig. 1 nicht dargestellten elektrischen Antrieb auf, der einen elektrischen Motor und eine Steuereinrichtung aufweist.

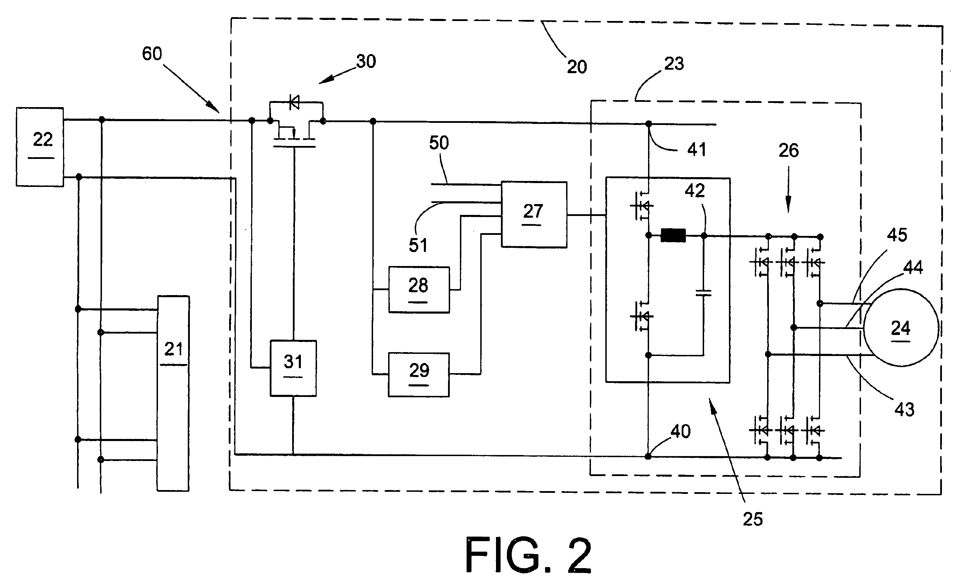

Eine Schaltungsanordnung 60 einer erfindungsgemäßen Arbeitsstelle einer Offenend-Rotorspinnmaschine ist in Fig.2 dargestellt. Ein Gleichspannungsnetzteil 22 liefert die Speisespannung für einen Rotorantrieb 20, der als Bestandteil der Spinnvorrichtung 3 den Spinnrotor antreibt. An das Netzteil 22 sind weitere elektrische Verbraucher 21 angeschlossen. In dem dargestellten Ausführungsbeispiel handelt es sich bei den elektrischen Verbrauchern um die elektrischen Antriebe der in Fig. 1 dargestellten Handhabungseinrichtungen. In dem dargestellten Ausführungsbeispiel weist jede Arbeitsstelle ein eigenes Netzteil 22 auf. Es ist aber auch möglich, dass für eine Gruppe von Arbeitsstellen ein Netzteil vorhanden ist.

Der Rotorantrieb weist einen Feldeffekttransistor 30 und eine Spannungserkennung 31 auf. Solange sich die Speisespannung des Netzteils 22 innerhalb eines zulässigen Toleranzbereiches bewegt, ist der Feldeffekttransistor 30 leitend. Der Strom kann dabei in beide Richtungen fließen. Die Spannungserkennung 31 überwacht dabei die Speisespannung und steuert den Feldeffekttransistor entsprechend an. Nur wenn die Speisespannung unterhalb eines zulässigen Wertes sinkt, sperrt der Feldeffekttransistor 30 und der Rotorantrieb versorgt sich, wie im Stand der Technik bekannt, selber.

Der Rotorantrieb weist weiter einen Rotormotor 24 und eine leistungselektronische Schaltung 23 auf. In dem dargestellten Ausführungsbeispiel besteht die leistungselektronische Schaltung 23 aus einem mittels Pulsweitenmodulation gesteuerten Tiefsetzsteller 25 und einem Wechselrichter 26. Der Tiefsetzsteller 25 besitzt eine aktive Endstufe und ist damit rückspeisefähig. Der Wechselrichter 26 arbeitet im Blockbetrieb.

Die Knoten 41 und 40 bilden den Spannungseingang der leistungselektronischen Schaltung 23 und des Tiefsetzstellers 25. Der Spannungsausgang des Tiefsetzstellers, der durch die Knoten 42 und 40 gebildet wird, ist mit dem Spannungseingang des Wechselrichters 26 verbunden. Der Wechselrichter 26 schaltet lediglich die Ausgangsspannung des Tiefsetzstellers 25 auf die Phasen 43, 44 und 45 des Rotormotors 24. Die Phasen 43, 44 und 45 bilden dann den Spannungsausgang der leistungselektronischen Schaltung 23.

Alternativ zu der leistungselektronischen Schaltung 23, wie sie in Fig. 2 dargstellt ist, kann auch ein mittels Pulsweitenmodulation betriebener Wechselrichter verwendet werden.

Der Tiefsetzsteller 25 wird durch den Regler 27 angesteuert, der im Wesentlichen eine Drehzahlregelung durchführt. Dazu werden dem Regler 27 an den Anschlüssen 50 und 51 die Solldrehzahl und die Istdrehzahl übergeben. Ferner beeinflussen der Überspannungssensor 28 und der Unterspannungssensor 29 den Regler 27. Beide Sensoren 28 und 29 erfassen die Spannung am Eingang der leistungselektronischen Schaltung 23. Der Einfluss des Unterspannungssensors 29 wird an dieser Stelle nicht weiter beschrieben, da er nur von Bedeutung ist, wenn bei einem Spannungsfehler der Rotorantrieb 20 durch Sperren des Feldeffekttransistor 30 vom Netzteil 22 und den weiteren elektrischen Verbrauchern 21 getrennt wird. Die Funktion des Überspannungssensors 28 wird im Folgenden noch erläutert.

Bei einer Bremsung des Rotorantriebes 20 wird das Pulspausenverhältnis zur Ansteuerung der aktiven Endstufe des Tiefsetzstellers 25 so verkleinert, dass dessen Ausgangsspannung kleiner wird als die innere Spannung des Rotormotors 24. Dieser arbeitet dann als Generator. Die aus dem Rotormotor 24 fließende Energie kann damit in die an das Netzteil 22 angeschlossenen elektrischen Verbraucher 21 fließen. Wenn die vom Rotorantrieb 20 abgegebene Generator- beziehungsweise Bremsenergie größer ist als die von den elektrischen Verbrauchern 21 aufgenommene Energie, kommt es zu einer Spannungsüberhöhung. Die Spannungstransformation erfolgt dabei im Tiefsetzsteller 25 mit aktiver Endstufe. Die Spannungsüberhöhung tritt auf, wenn der Schaltzustand des Tiefsetzstellers den Bremsstrom in die Verbraucher beziehungsweise in das Netzteil leitet. Damit die Überspannung keine schädlichen Werte annimmt, erfolgt durch den Überspannungssensor 28 ein Eingriff in den Regler 27, indem eine zur Drehzahlregelung überlagerte Pulsweitenmodulation vorgenommen wird. Dabei wird die Spannung an dem Rotormotor wieder angehoben. Dies hat zur Folge, dass die Bremsleistung so verkleinert wird, dass sich am Eingang der Rotorantriebes 20 beziehungsweise des Tiefsetzstellers 25 eine Überspannung mit noch unkritischen Spannungswerten einstellt.

## Patentansprüche

1. Arbeitsstelle (2) einer Offenend-Rotorspinnmaschine (1) mit einem Rotorantrieb (20), der einen Rotormotor (24) und Steuermittel (23, 27, 28, 29, 31) aufweist, wobei die Steuermittel (23, 27, 28, 29, 31) eine leistungselektronische Schaltung (23) beinhalten, die einen Spannungseingang (41, 40) und einen Spannungsausgang (43, 44, 45) aufweist, wobei die Offenend-Rotorspinnmaschine (1) mindestens ein Netzteil (22) aufweist, an das der Spannungseingang (41, 40) zumindest im Produktionsbetrieb der Arbeitsstelle (2) angeschlossen ist und wobei der Rotormotor (24) an den Spannungsausgang (43, 44, 45) angeschlossen ist und zum Bremsen mittels der Steuermittel (23, 27, 28) als Generator betreibbar ist, **dadurch gekennzeichnet, dass** an der Arbeitsstelle (2) mindestens ein weiterer elektrischer Verbraucher (21), der für den Produktionsbetrieb der Arbeitsstelle (2) erforderlich ist, vorhanden ist und eine Schaltungsanordnung (60) dazu ausgebildet ist, die elektrische Bremsenergie, die der Rotorantrieb (20) beim Bremsen abgibt, dem mindestens einen weiteren elektrischen Verbraucher (21) zuzuführen und der mindestens eine weitere elektrische Verbraucher (21) dazu ausgebildet ist, die Energie aufzunehmen.

2. Arbeitsstelle (2) nach Anspruch 1, **dadurch gekennzeichnet, dass** der mindestens eine weitere elektrische Verbraucher (21) als elektrischer Antrieb ausgebildet ist.

3. Arbeitsstelle (2) nach Anspruch 2, **dadurch gekennzeichnet, dass** der elektrische Antrieb dazu ausgebildet ist, mindestens eines der Aggregate Auflösewalze (15) für das Faserband (6), Fadenabzug (16) aus der Spinnvorrichtung (3), Fadenverlegung (18) auf die Garnspule (8), Wickelwalze (11) zum Rotieren der Garnspule (8) und Schwenkvorrichtung für die Saugdüse (14) zum Erfassen des Fadens der Garnspule (8) anzutreiben.

4. Arbeitsstelle (2) nach einem der vorherigen Ansprüche, **dadurch gekennzeichnet, dass** der Rotorantrieb (20) und der mindestens eine weitere elektrische Verbraucher (21) beide an das Netzteil (22) angeschlossen sind.

5. Arbeitsstelle (2) nach einem der vorherigen Ansprüche, **dadurch gekennzeichnet, dass** die Steuermittel (23, 27, 28) des Rotorantriebes (20) dazu ausgebildet sind, die von dem Rotormotor abgegebene Bremsleistung so zu beeinflussen, dass am Spannungseingang (41, 40) der leistungselektronischen Schaltung (23) des Rotorantriebes (20) ein zulässiger Spannungswert nicht überschritten wird.

6. Arbeitsstelle (2) nach Anspruch 5, **dadurch gekennzeichnet, dass** die Steuermittel (27, 28) dazu ausgebildet sind, die leistungselektronische Schaltung (23) so anzusteuern, dass beim Überschreiten eines zulässigen Spannungswertes am Spannungseingang (41, 40) die Spannung am Spannungsausgang (43, 44, 45) der leistungselektronischen Schaltung (23) angepasst wird.

7. Verfahren zum Betreiben einer Arbeitsstelle (2) einer Offenend-Rotorspinnmaschine (1) mit einem Rotorantrieb (20), der einen Rotormotor (24) und Steuermittel (23, 27, 28, 29, 31) aufweist, wobei die Steuermittel (23, 27, 28, 29, 31) eine leistungselektronische Schaltung (23) beinhalten, die einen Spannungseingang (41, 40) und einen Spannungsausgang (43, 44, 45) aufweist, wobei der Spannungseingang (41, 40) zumindest im Produktionsbetrieb der Arbeitsstelle (2) an ein Netzteil (22) angeschlossen ist und wobei der Rotormotor (24) an den Spannungsausgang (43, 44, 45) angeschlossen ist und zum Bremsen mittels der Steuermittel (23, 27, 28) als Generator betrieben wird, **dadurch gekennzeichnet, dass** die elektrische Bremsenergie, die der Rotorantrieb (20) beim Bremsen abgibt, von mindestens einem weiteren elektrischen Verbraucher (21) der Arbeitsstelle (2) aufgenommen wird, der für den Produktionsbetrieb der Arbeitsstelle (2) erforderlich ist.

8. Verfahren nach Anspruch 7, **dadurch gekennzeichnet, dass** die Bremsenergie von einem elektrischen Antrieb der Arbeitsstelle aufgenommen wird.

9. Verfahren nach Anspruch 8, **dadurch gekennzeichnet, dass** der elektrische Antrieb mindestens eines der Aggregate Auflösewalze (15) für das Faserband (6), Fadenabzug (16) aus der Spinnvorrichtung (3), Fadenverlegung (18) auf die Garnspule (8), Wickelwalze (11) zum Rotieren der Garnspule (8) und die Schwenkvorrichtung für die Saugdüse (14) zum Erfassen des Fadens der Garnspule (8) antreibt.

10. Verfahren nach einem der Ansprüche 7 bis 9, **dadurch gekennzeichnet, dass** die von dem Rotorantrieb (20) abgegebene Bremsleistung so beeinflusst wird, dass am Spannungseingang (41, 40) der leistungselektronischen Schaltung (23) des Rotorantriebes (20) ein zulässiger Spannungswert nicht überschritten wird.

11. Verfahren nach Anspruch 10, **dadurch gekennzeichnet, dass** beim Überschreiten eines zulässigen Spannungswertes am Spannungseingang (41, 40) die Spannung am Spannungsausgang (43, 44, 45) der leistungselektronischen Schaltung (23) angepasst wird.

## Claims

1. Workstation (2) of an open-end rotor spinning machine (1) with a rotor drive (20), which has a rotor motor (24) and control means (23, 27, 28, 29, 31), the control means (23, 27, 28, 29, 31) containing an electronic power circuit (23), which has a voltage input (41, 40) and a voltage output (43, 44, 45), the open-end rotor spinning machine (1) having at least one power supply unit (22), to which the voltage input (41, 40) is connected at least during production operation of the workstation (2) and the rotor motor (24) being connected to the voltage output (43, 44, 45) and it being possible to operate it as a generator for braking by means of the control means (23, 27, 28), **characterised in that** at least one further electrical consumer unit (21), which is required for the production operation of the workstation (2), is provided at the workstation (2), and a circuit arrangement (60) is configured to supply the electric braking energy, which the rotor drive (20) outputs during braking, to the at least one further electric consumer unit (21) and the at least one further electric consumer unit (21) is configured to consume the energy.

2. Workstation (2) according to claim 1, **characterised in that** the at least one further electric consumer unit (21) is configured as an electric drive.

3. Workstation (2) according to claim 2, **characterised in that** the electric drive is configured to drive at least one of the assemblies, opening roller (15) for the fibre band (6), thread draw-off device (16) from the spinning device (3), thread displacement device (18) onto the yam bobbin (8), winding roller (11) to rotate the yam bobbin (8) and pivoting device for the suction nozzle (14) to collect the thread from the yam bobbin (8).

4. Workstation (2) according to any one of the preceding claims, **characterised in that** the rotor drive (20) and the at least one further electric consumer unit (21) are both connected to the power supply unit (22).

5. Workstation (2) according to any one of the preceding claims, **characterised in that** the control means (23, 27, 28) of the rotor drive (20) are configured to influence the brake power output by the rotor motor in such a way that a permissible voltage value is not exceeded at the voltage input (41, 40) of the electronic power circuit (23) of the rotor drive (20).

6. Workstation (2) according to claim 5, **characterised in that** the control means (27, 28) are configured to activate the electronic power circuit (23) in such a way that, on exceeding a permissible voltage value at the voltage input (41, 40) the voltage at the voltage output (43, 44, 45) of the electronic power circuit (23) is adjusted.

7. Method for operating a workstation (2) of an open-end rotor spinning machine (1) with a rotor drive (20), which has a rotor motor (24) and control means (23, 27, 28, 29, 31), the control means (23, 27, 28, 29, 31) containing an electronic power circuit (23), which has a voltage input (41, 40) and a voltage output (43, 44, 45), the voltage input (41, 40) being connected to a power supply unit (22) at least during production operation of the workstation (2) and the rotor motor (24) being connected to the voltage output (43, 44, 45) and being operated as a generator for braking by means of the control means (23, 27, 28), **characterised in that** the electric braking energy, which the rotor drive (20) outputs during braking, is consumed by at least one further electric consumer unit (21) of the workstation (2), which is required for the production operation of the workstation (2).

8. Method according to claim 7, **characterised in that** the braking energy is consumed by an electric drive of the workstation.

9. Method according to claim 8, **characterised in that** the electric drive drives at least one of the assemblies, opening roller (15) for the fibre band (6), thread draw-off device (16) from the spinning device (3), thread displacement device (18) onto the yam bobbin (8), winding roller (11) for rotating the yam bobbin (8) and the pivoting device for the suction nozzle (14) to collect the thread from the yam bobbin (8).

10. Method according to any one of claims 7 to 9, **characterised in that** the braking power output by the rotor drive (20) is influenced in such a way that a permissible voltage value is not exceeded at the voltage input (41, 40) of the electronic power circuit (23) of the rotor drive (20).

11. Method according to claim 10, **characterised in that** the voltage at the voltage output (43, 44, 45) of the electronic power circuit (23) is adapted when a permissible voltage value is exceeded at the voltage input (41, 40).

## Revendications

1. Poste de travail (2) d'un métier à filer à rotor (1) à bout ouvert, avec un entraînement de rotor (20) qui présente un moteur de rotor (24) et des moyens de commande (23, 27, 28, 29, 31), sachant que les moyens de commande (23, 27, 28, 29, 31) comprennent un montage électronique de puissance (23) qui présente une entrée de tension (41, 40) et une sortie de tension (43, 44, 45), sachant que le métier à filer à rotor (1) à bout ouvert présente au moins un bloc d'alimentation (22) auquel l'entrée de tension (41, 40) est raccordée au moins pendant le fonctionnement de production du poste de travail (2), et sachant que le moteur de rotor (24) est raccordé à la sortie de tension (43, 44, 45) et peut, à l'aide des moyens de commande (23, 27, 28), être exploité en générateur aux fins de freinage,
**caractérisé en ce qu'**il est prévu sur le poste de travail (2) au moins un consommateur électrique supplémentaire (21) qui est nécessaire pour le fonctionnement de production du poste de travail (2), et un montage électrique (60) est conçu pour apporter au consommateur électrique supplémentaire au moins unique (21) l'énergie de freinage électrique que délivre l'entraînement de rotor (20) lors du freinage, et le consommateur électrique supplémentaire au moins unique (21) est conçu pour absorber l'énergie.

2. Poste de travail (2) selon la revendication 1, **caractérisé en ce que** le consommateur électrique supplémentaire au moins unique (21) est réalisé sous la forme d'un entraînement électrique.

3. Poste de travail (2) selon la revendication 2, **caractérisé en ce que** l'entraînement électrique est conçu pour entraîner au moins un des organes suivants : cylindre couvert (15) pour le ruban de fibres (6), évacuation du fil (16) hors du dispositif de filature (3), pose du fil (18) sur la bobine de fil (8), cylindre d'enroulement (11) pour faire tourner la bobine de fil (8), et dispositif de pivotement pour la buse aspirante (14) destinée à saisir le fil de la bobine de fil (8).

4. Poste de travail (2) selon l'une des revendications précédentes, **caractérisé en ce que** l'entraînement de rotor (20) et le consommateur électrique supplémentaire au moins unique (21) sont tous deux raccordés au bloc d'alimentation (22).

5. Poste de travail (2) selon l'une des revendications précédentes, **caractérisé en ce que** les moyens de commande (23, 27, 28) de l'entraînement de rotor (20) sont conçus pour agir sur la puissance de freinage délivrée par le moteur de rotor de telle sorte qu'une valeur de tension admissible n'est pas dépassée à l'entrée de tension (41, 40) du montage électronique de puissance (23) de l'entraînement de rotor (20).

6. Poste de travail (2) selon la revendication 5, **caractérisé en ce que** les moyens de commande (27, 28) sont conçus pour asservir le montage électronique de puissance (23) de telle sorte qu'en cas de dépassement d'une valeur de tension admissible à l'entrée de tension (41, 40), la tension à la sortie de tension (43, 44, 45) du montage électronique de puissance (23) est adaptée.

7. Procédé d'exploitation d'un poste de travail (2) d'un métier à filer à rotor (1) à bout ouvert comprenant un entraînement de rotor (20) qui présente un moteur de rotor (24) et des moyens de commande (23, 27, 28, 29, 31), sachant que les moyens de commande (23, 27, 28, 29, 31) comprennent un montage électronique de puissance (23) qui présente une entrée de tension (41, 40) et une sortie de tension (43, 44, 45), sachant que l'entrée de tension (41, 40) est raccordée à un bloc d'alimentation (22) au moins pendant le fonctionnement de production du poste de travail (2), et sachant que le moteur de rotor (24) est raccordé à la sortie de tension (43, 44, 45) et est, à l'aide des moyens de commande (23, 27, 28), exploité en générateur aux fins de freinage, **caractérisé en ce que** l'énergie de freinage électrique que délivre l'entraînement de rotor (20) lors du freinage est absorbée par au moins un consommateur électrique supplémentaire (21) du poste de travail (2), qui est nécessaire pour le fonctionnement de production du poste de travail (2).

8. Procédé selon la revendication 7, **caractérisé en ce que** l'énergie de freinage est absorbée par un entraînement électrique du poste de travail.

9. Procédé selon la revendication 8, **caractérisé en ce que** l'entraînement électrique entraîne au moins un des organes suivants : cylindre couvert (15) pour le ruban de fibres (6), évacuation du fil (16) hors du dispositif de filature (3), pose du fil (18) sur la bobine de fil (8), cylindre d'enroulement (11) pour faire tourner la bobine de fil (8), et dispositif de pivotement pour la buse aspirante (14) destinée à saisir le fil de la bobine de fil (8).

10. Procédé selon l'une des revendications 7 à 9, **caractérisé en ce que** la puissance de freinage délivrée par l'entraînement de rotor (20) est influencée de telle sorte qu'une valeur de tension admissible n'est pas dépassée à l'entrée de tension (41, 40) du montage électronique de puissance (23) de l'entraînement de rotor (20).

11. Procédé selon la revendication 10, **caractérisé en ce que**, en cas de dépassement d'une valeur de tension admissible à l'entrée de tension (41, 40), la tension à la sortie de tension (43, 44, 45) du montage électronique de puissance (23) est adaptée.
